# EUROPEAN PATENT APPLICATION

(11) **EP 1 577 533 A2**
(43) Date of publication of application: **21.09.2005**
(21) Application number: 05005711.6
(22) Date of filing: 16.03.2005
(51) Int. Cl.: F02M 35/024

(54) **Air filter device**

(30) Priority: 17.03.2004 IT BO20040156
(71) Applicant: BMC S.R.L., 40059 Medicina (IT)
(72) Inventor: Bergami, Gaetano, 40059 Medicina (BO) (IT)
(74) Representative: Negrini, Elena

(57) **Abstract**

An air filter device is fit to be housed in a container and it is provided with a support mean (2) for an filtering element (3) of the air.

The support mean (2) of the device (1) presents an internal annular seat (4) for the perimetric edge of the filtering element (3).

## Description

The present invention relates to filters for filtering the intake air for combustion engines and it refers to an air filter device.

The known filter devices of flattened form are destined to be lodged in a container and endowed with an corrugated filtering element, generally made in polyester or paper, fixed to an heavy and voluminous support destined to strengthen the filter and to match and seal the inside walls of the container.

The support is generally obtained by means a casting of polyurethanic material incorporating the peripheral portion of the filtering element.

A drawback of said known flattened filters consists in the fact that the support must be of big dimensions to give enough mechanical strength to the filter and it is excessively heavy and bulky causing a reduction of the useful volume of the container.

Other drawback is that the useful surface of the filtering element, is insufficient because this last must be moderately corrugated to allow the penetration of the polyurethanic material cast among the interspaces of the undulation of the filtering element the same. Another drawback is that the support is affected by deformations that can compromise the hermetic sealing of it with the container allowing the passage of not filtered air.

A further drawback consists in the fact that the polyurethanic suppor is not resistant to temperatures over 90° can occur in the high performances motors.

They are also known filter devices whose support is constituted by a plurality of rigid elements shaped for matching the corrugated edges of the filtering element. Such elements and edges are reciprocally fixed by gluing.

A drawback of such known devices consists in the scarce keeping of the gluing that can cause breakups of the filter and the entering of its parts in the motor with a serious damage for it.

Other drawback of these latter known devices consists in their complexity that makes them expensive and difficult to be made.

An object of the present invention is to propose a filter device of flattened form, extremely light and sufficiently rigid and non-detormable.

Further object of the present invention is to propose a mechanically strong device, resistant to the high temperatures and reliable, able to reduce the resistance of the air without decreasing the useful volume of the device.

Other object is to propose a device that can be easily housed in the motor room.

The above-mentioned objects are achieved according to the content of the claims.

The characteristics of the invention are underlined in the following with particular reference with the attached drawing, in which:

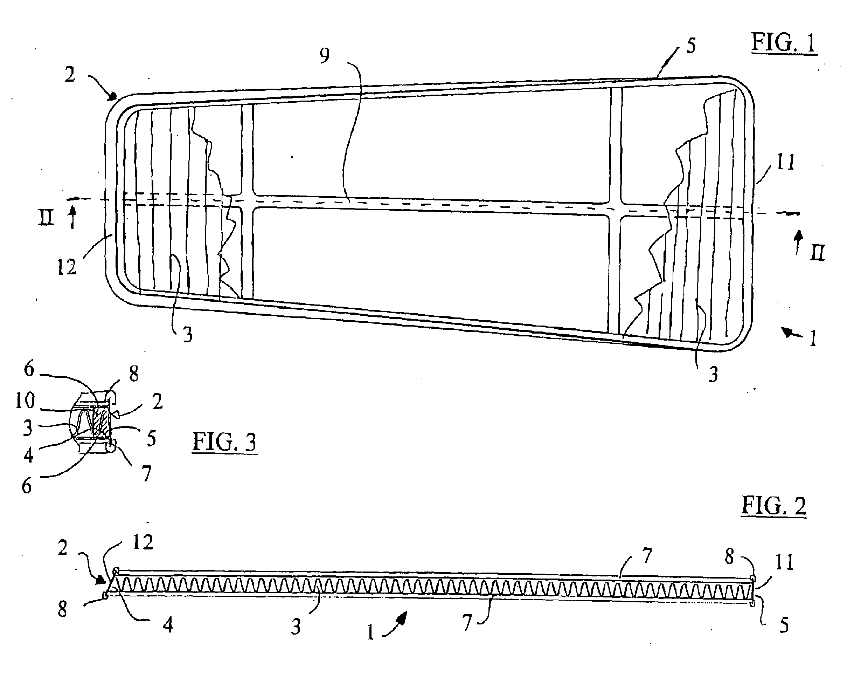

- figure 1 shows a schematic view in plant of the device object of the present invention in which some parts have been removed for better underlining the others;
- figure 2 shows a section view according to the line II-II of figure 1;
- figure 3 shows an enlarged view of a portion of the device of ligure 2.

With reference to the figures from 1 to 3, the air filter device is referenced with 1 for the intake air for the internal combustion engines, object of the present invention and fit to be installed in a respective container to intercept and to filter such air.

The device 1 is provided with a support mean 2, annular frame shaped, for an air filtering element 3.

The support mean 2 presents an internal annular seat 4 in which the perimetric edge of the filtering element 3 is fixed by means of a polyurethane, silicone, epoxy or similar adhesive 10.

The support mean 2 is monolithic in plastic or in resin strengthened with fibers of carbon, kevlar, glass or similar.

The filtering element 3 is corrugated and is extends, at least approximately, on a plane. In alternative the invention provides that the filtering element 3 can extend on a curved surface with straight generatrix parallel to the undulations.

The filtering element 3 includes at least a layer of natural and/or synthetic fibers, for instance a fabric in cotton, in synthetic microfibre or their mixtures.

The layer of fibers is contained between two support layers made of metallic net or in composite fiber and destined to confer resistance and rigidity to the filtering element 3.

The support mean 2 is shaped in order to reproduce the form of its lodging in the container and it presents a "Greek P", in other words of the letter π of the Greek alphabet, section shaped, whose central part of the superior portion that is crown portion 5, in cooperation with the two legs 6, defines a seat 4 and in which the side and protruding parts of the crown portion 5 form two opposite bracket portions 7.

The device 1 includes two annular washer 8, for the air sealing with the container, each of them fixed, for instance to joint, to a respective bracket portion 7.

The device includes reticular means 9 integral with the support mean 2 in order to stiffen it.

A portion of the crown portion 5 of the support mean 2 is nearly perpendicular to corresponding portions of the legs 6 and a portion of such crown portion 5 is tilted in respect to corresponding portions of the legs 6.

The legs 6 are parallel to the filtering element 3 and therefore the crown portion 5 of the support mean 2 presents a perpendicular portion 11 and a tilted portion 12 tilted in comparison with such filtering element 3.

The footprint of the filtering element 3 is slightly bigger then the internal perimeter of the footprint of the seat 4. Such sizing of the filtering element 3 facilitate its insertion in the seat 4 for the gluing.

The operation of the device provides that it is disposed inside the container that it mach internally by means the washers 8 that prevent the air passage externally to the filtering element. The device 1 can assume varied forms for better suiting to the available spaces. The eventual inclination of the crown portion 5, besides facilitating the spaces exploitation, it allows the realization of joint or engagement connections of the device to the respective container.

An advantage of the present invention is to provide an air filter device, flattened form, extremely light and sufficiently non-deformable.

Other advantage is to provide a device with low resistance to the air flow and small in order to not to reduce the useful volume of the container.

Other advantage is to propose a device provided of a reliable air sealing with the inside walls of the container.

## Claims

1. Air filter device to be lodged in a container and provided of a support mean (2) for a filtering element (3) of the air, said device (1) being **characterized in that** the support mean (2) presents an internal annular seat (4) for the perimetric edge of the filtering element (3).

2. Device according to claim 1 **characterized in that** the perimetric edge of the filtering element (3) is fixed in the seat. (4) by means of polyurethane, silicone, epoxy or similar adhesive (10).

3. Device according to claim 1 **characterized in that** the support mean (2) it made of resins strengthened with fibers of carbon, kevlar, glass or the like.

4. Device according to claim 3 **characterized in that** the filtering element (3) comprises at least a layer of natural fibers and/or synthetic and at least a supporting layer made of metal or of composite fiber.

5. Device according to claim 1 **characterized in that** the support mean (2) is annular shaped and presents a "Greek P" shaped section whose central part of the crown portion (5), in collaboration with the two legs (6), it defines the seat (4) and in which the side and protruding parts of the crown portion (5) form two opposing bracket portions (7).

6. Device according to claim 5 **characterized in that** it comprises at least a washer (8) for the sealing of air with the container, fixed to a respective bracket portion (7).

7. Device according to claim 1 **characterized in that** the support mean (2) comprises stiffening reticular means (9).

8. Device according to claim 5 **characterized in that** at least a portion of the crown portion (5), of the support mean (2), is nearly perpendicular to corresponding portions of the legs (6).

9. Device according to claim 5 **characterized in that** at least a portion of the crown portion (5), of the support mean (2), is tilted with respect to corresponding portions of the legs (6).

10. Device according to claim 1 **characterized in that** the filtering element (3) is corrugated and it extends at least on an approximately plane or curved surface with straight generatrix parallel to the undulations.

11. Device according to the claims 5 and 10 **characterized in that** the crown portion (5), of the support mean (2) presents at least a perpendicular portion (11) and at least a tilted portion (12), tilted with respect to the filtering element (3).

12. Device according to claim 5 **characterized in that** the footprint of the filtering element (3) it is slightly bigger than the internal footprint of the seat (4).
